# EUROPEAN PATENT SPECIFICATION

(11) **EP 2 989 624 B1**
(45) Date of publication and mention of the grant of the patent: **03.10.2018**
(21) Application number: 14719828.7
(22) Date of filing: 24.04.2014
(51) Int. Cl.: G09B 19/00

(54) **METHODS, SYSTEMS AND APPARATUSES FOR EMULATING AN X-RAY SCANNING MACHINE**
VERFAHREN, SYSTEME UND VORRICHTUNGEN ZUR EMULATION EINER RÖNTGENABTASTUNGSMASCHINE
PROCÉDÉS, SYSTÈMES ET APPAREILS POUR ÉMULER UN TAPIS D'INSPECTION

(30) Priority: 26.04.2013 GB 201307616
(43) Date of publication of application: 02.03.2016
(73) Proprietor: Quadratica (UK) Limited, Grimsby DN37 9TT (GB)
(72) Inventor: CLARKE, Andrew, Grimsby DN33 3HE (GB); PITTS, Keith, Grimsby DN32 9PE (GB); GREY, Christopher, Immingham DN40 2JD (GB)
(74) Representative: D Young & Co LLP
(86) International application number: PCT/GB2014/051268
(87) International publication number: WO 2014/174289

(56) References cited:
- EP-A1- 2 016 572
- WO-A1-00/26852
- WO-A1-2009/082762
- US-A- 5 243 693
- US-A1- 2003 023 592
- US-A1- 2007 196 803
- US-A1- 2008 044 801
- US-A1- 2008 212 742
- US-A1- 2008 240 578
- US-B1- 6 899 540

## Description

### FIELD OF USE

The present disclosure relates to methods, systems and apparatuses for emulating an X-ray scanning machine.

### BACKGROUND

X-ray scanning machines are commonly found at airports or in other locations where security checks can to be carried out without an invasive, lengthy and labour-intensive manual search. The security personnel using such X-ray machines may be required to take part in a training program to learn to identify security threats based on the images output by the X-ray machine. Different X-ray machines, and in particular machines from different manufacturers, operate differently and may for example have different image processing operations when displaying scan data to the security personnel. In view of the cost of each X-ray machine, training a security officer on a number of different X-ray machines can be very expensive.

It can therefore be appropriate to use training software which emulates different types of X-ray machines, thereby reducing the costs involved in obtaining training equipment. Such training software can therefore be complex and require a large amount of processing to generate simulated X-ray images for a large number of X-ray machines, or may need to store extremely large numbers of captured X-ray images, or may be less complex but may then be limited in the number of X-ray machines they can emulate.

US 5,243.693 A describes a system for simulating X-ray scanners includes a first memory for storing a database of component X-ray images, a second memory for storing an instruction set and respective relative opacities of the stored component images, and a computer coupled to the first and second memories and responsive to the stored instruction set for creating composite X-ray images from the stored component images. A display is coupled to the computer for displaying at least one of the composite X-ray images as a displayed image. A data entry keyboard is coupled to the computer to permit data to be entered thereto in accordance with the stored instruction set. A selection device is coupled to the computer for comparing the selected component image with a subset of the stored component images representing hazardous objects so as to determine whether the selected component image matches one of the component images in the subset. The system further includes a reporting device coupled to the computer for reporting whether a match occurred.

### SUMMARY

Aspects and embodiments are discussed in the appended claims.

According to a first aspect of the present disclosure, there is provided a method for emulating an X-ray scanning machine. The method comprises receiving raw X-ray image data for a scanned object; processing the raw X-ray image data to identify material types in the scanned object; generating intermediate image data wherein the intermediate image data encodes the types of material identified at the processing step; receiving, at an emulator, the intermediate image data; receiving, at the emulator, an indication of a selected X-ray machine to be emulated, wherein the selected X-ray machine is selected from a group comprising at least a first X-ray machine and a second X-ray machine, the first X-ray machine using a different representation scheme for generating images from raw X-ray image data than the second X-ray machine; and generating, at the emulator, simulated image data based on the types of material encoded in the intermediate image data and on the selected X-ray machine, the simulated image data simulating the image to be displayed on the selected X-ray machine for the raw X-ray image data. Such a method can limit or reduce the amount of processing carried out by the emulator, thereby enabling the method to be used in more varied environments, for example, in environments with processing resources available to the emulator are limited.

The method may comprise, after generation of the intermediate image data, storing the intermediate image data in image data storage. Using image data storage or an image store may increase the speed of the method (as stored intermediate image data is already prepared and available if stored) and/or to reduce the number of times the pre-processing of raw X-ray image data is carried out.

The method may comprise outputting, by the emulator, the simulated image data. For example, the method may comprise displaying the corresponding simulated image to a user in training, generation an image file to be saved and/or printing the simulated image.

The emulator may be a web-browser based client or web application, for example the emulator may be a web-browser plug-in or implemented using a web-browser plug-in. In these examples, the emulator may be executed via a web browser (or another web-related application) for example by accessing a URL wherein the corresponding web page launches a plug-in running the emulator or for running the emulator. It can be the case that computing or processing resources available to a web application can be more limited than the computing or processing resources available. This can increase the number of environments or platforms where the method can be used because web-browsers are widely available on computers or computing devices and, additionally, can allow plug-ins to be installed and to run applications. Because the method can be used in environments where computing resources are limited and because web-browser extensions or plug-in can have limited computing resources available, the method can be well suited for use with a web-browser based client, for example with a web-browser plug-in or extension.

According to a second aspect of the present disclosure, there is provided a system for emulating an X-ray scanning machine. The system comprises a pre-processing unit and an emulator. The pre-processing unit arranged to process raw X-ray image data for a scanned object to identify material types in the scanned object, and generate intermediate image data wherein the intermediate image data encodes the types of material identified by the pre-processing unit. The emulator arranged to receive the intermediate image data, receive an indication of a selected X-ray machine to be emulated, wherein the selected X-ray machine is selected from a group comprising at least a first X-ray machine and a second X-ray machine, the first X-ray machine using a different representation scheme for generating images from raw X-ray image data than the second X-ray machine, and generate simulated image data based on the types of material encoded in the intermediate image data and on the selected X-ray machine the simulated image data simulating the image to be displayed on the selected X-ray machine for the raw X-ray image data. With such a system, the amount of processing carried out by the emulator can be limited or reduced, thereby enabling the system to be used in more varied environments, for example, in environments with processing resources available to the emulator are limited.

The system may comprise image data storage arranged to store intermediate image data and wherein the emulator is arranged to receive the intermediate image data from the image data storage. This may increase the speed of operation of the system (as stored intermediate image data is already prepared and available if stored) and/or to reduce the number of times the pre-processing of raw X-ray image data is carried out.

The emulator may be further arranged to output the simulated image data. For example, the emulator may be arranged to cause the corresponding simulated image to be displayed to a user in training, an image file to be generated (e.g. to be saved) and/or the simulated image to be printed.

The emulator may be a web-browser based client, for example a web-browser plug-in. This can be advantageous as it can increase the environments of platforms where the system can be used because web-browsers are widely available on computers or computing devices and, additionally, can allow plug-ins to be installed. Because the system can be used in environments where computing resources are limited and because web-browser extensions or plug-in can have limited computing resources available, the system can be well suited for use with a web-browser based client, for example with a web-browser plug-in

According to a third aspect of the present disclosure, there is provided a computer program arranged to carry out a method as discussed above in respect of the first aspect.

According to a fourth aspect of the present disclosure, there is provided a computer program product comprising a computer usable medium having a computer readable program code embodied therein, the computer readable program code for performing the steps of: receiving raw X-ray image data for a scanned object; processing the raw X-ray image data to identify material types in the scanned object; generating intermediate image data wherein the intermediate image data encodes the types of material identified at the processing step; receiving, at an emulator, the intermediate image data; receiving, at the emulator, an indication of a selected X-ray machine to be emulated, wherein the selected X-ray machine is selected from a group comprising at least a first X-ray machine and a second X-ray machine, the first X-ray machine using a different representation scheme for generating images from raw X-ray image data than the second X-ray machine; and generating, at the emulator, simulated image data based on the types of material encoded in the intermediate image data and on the selected X-ray machine, the simulated image data simulating the image to be displayed on the selected X-ray machine for the raw X-ray image data. The computer usable medium may for example be a transitory or non-transitory computer usable medium.

According to a fifth aspect of the present disclosure, there is provided a method for emulating an X-ray scanning machine. The method comprises receiving intermediate image data corresponding to raw X-ray image data for a scanned object, wherein the intermediate image data encodes types of material in the scanned object; receiving an indication of a selected X-ray machine to be emulated, wherein the selected X-ray machine is selected from a group comprising at least a first X-ray machine and a second X-ray machine, the first X-ray machine using a different representation scheme for generating images from raw X-ray image data than the second X-ray machine; and generating simulated image data based on the types of material encoded in the intermediate image data and on the selected X-ray machine, the simulated image data simulating the image to be displayed on the selected X-ray machine for the raw X-ray image data.

According to a sixth aspect of the present disclosure, there is provided an emulator for emulating an X-ray scanning machine. The emulator is arranged to receive intermediate image data corresponding to raw X-ray image data for a scanned object, wherein the intermediate image data encodes types of material in the scanned object; receive an indication of a selected X-ray machine to be emulated, wherein the selected X-ray machine is selected from a group comprising at least a first X-ray machine and a second X-ray machine, the first X-ray machine using a different representation schemes for generating images from raw X-ray image data than the second X-ray machine; and generate a simulated image data by processing the intermediate image data to, wherein the processing of the intermediate image data is based on the encoded types of material in the intermediate image data and on the selected X-ray machine the simulated image data simulating the image to be displayed on the selected X-ray machine for the raw X-ray image data.

According to a seventh aspect of the present disclosure, there is provided a computer program arranged to carry out a method as discussed above in respect of the fifth aspect.

According to an eighth aspect of the present disclosure, there is provided a computer program product comprising a computer usable medium having a computer readable program code for performing the steps of: receiving intermediate image data corresponding to raw X-ray image data for a scanned object, wherein the intermediate image data encodes types of material in the scanned object; receiving an indication of a selected X-ray machine to be emulated, wherein the selected X-ray machine is selected from a group comprising at least a first X-ray machine and a second X-ray machine, the first X-ray machine using a different representation scheme for generating images from raw X-ray image data than the second X-ray machine; and generating simulated image data based on the types of material encoded in the intermediate image data and on the selected X-ray machine, the simulated image data simulating the image to be displayed on the selected X-ray machine for the raw X-ray image data. The computer usable medium may for example be a transitory or non-transitory computer usable medium

According to a ninth aspect of the present disclosure, there is provided a method for preparing for emulation of an X-ray scanning machine. The method comprises receiving raw X-ray image data for a scanned object; processing the raw X-ray image data to identify material types in the scanned object; and generating intermediate image data wherein the intermediate image data encodes the types of material identified at the processing step.

According to a tenth aspect of the present disclosure, there is provided a pre-processing system for preparing for emulation of an X-ray scanning machine. The pre-processing system is arranged to: receive raw X-ray image data for a scanned object; process the raw X-ray image data to identify material types in the scanned object; and generate intermediate image data wherein the intermediate image data encodes the types of material identified at the processing step.

According to an eleventh aspect of the present disclosure, there is provided a computer program arranged to carry out a method as discussed above in respect of the ninth aspect.

According to a twelfth aspect of the present disclosure, there is provided a computer program product comprising a computer usable medium having a computer readable program code embodied therein, the computer readable program code for performing the steps of: receiving raw X-ray image data for a scanned object; processing the raw X-ray image data to identify material types in the scanned object; and generating intermediate image data wherein the intermediate image data encodes the types of material identified at the processing step. The computer usable medium may for example be a transitory or non-transitory computer usable medium.

### BRIEF DESCRIPTION OF DRAWINGS

The present disclosure will now be discussed, by way of example only, with reference to the following drawings in which like reference numerals denote like elements.
Figure 1 is an illustration of baggage to be scanned;
Figure 2 is a schematic illustration of an X-ray image in grey-scale;
Figure 3 is a schematic illustration of an X-ray image with colour-coding;
Figure 4 is an illustration of an X-ray emulator;
Figure 5 is an illustration of a system in accordance with the present disclosure;
Figure 6 is an illustration of another system in accordance with the present disclosure;
Figure 7 is an illustration of storage required with the systems of Figures 4-6;
Figure 8 is a schematic illustration of the content of example intermediate image data;
Figure 9 is a flowchart illustrating an example method in accordance with the present disclosure; and
Figure 10 is an example illustration of a computer or computing device.

### DETAILED DESCRIPTION OF EXAMPLE EMBODIMENTS

Example embodiments in accordance with the present disclosure will now be discussed for illustrative purposes. However, it will be apparent to the skilled person that the disclosed system(s), method(s), and apparatus may be implemented using any number of techniques. The present disclosure is not limited to the illustrative implementations, drawings, and techniques illustrated below, but may be modified within the spirit and scope of the appended claims.

"X-ray raw image data", "raw X-ray image data" or "raw image data" refers herein to the data received from an X-ray scanner or X-ray scanning apparatus. For example, the X-ray raw image data may correspond to, comprise, or be a grey-scale image. In cases where the X-ray scanner or scanning apparatus includes a plurality of sensors or X-ray scanners, the X-ray raw image data may comprise data received for some or all of the plurality of sensors or X-ray scanners, respectively, and/or data received for portions or all of the scanning area for each sensor or X-ray scanner, respectively.

The term "image" as used herein refers to an actual image which is for example displayed on a monitor or display whereas the term "image data" refers to the data for encoding or representing an image. For example, in a conventional computer, image data can refer to the content of an image file (e.g. a BMP, JPEG, PNG, etc. file) wherein the file can be open by a user to display the corresponding image on the screen (and/or modified using an image editor for example). Image data may not necessarily refer to the content of only one file and, for example, when image data is stored or communicated, it may be stored or communicated in one or a plurality of files or messages, respectively.

Also, "simulated X-ray image data" or "simulated image data" in the present disclosure refers to image data for an image which simulates the image displayed by the emulated X-ray machine (i.e. the X-ray machine selected to be emulated, or maybe simulated). For example, simulated X-ray image data corresponding to X-ray raw image data can be used by a monitor or a display to output an image to a user, wherein the image simulates the image that would be displayed by the emulated X-ray machine for the X-ray raw image data. The simulated image data may for example comprise data encoding a 2D-image wherein scanned objects are colour-encoded depending on the type of material and on the emulated X-ray machine. For example, with some actual X-ray machines, the image displayed may be colour-coded wherein organic materials will be displayed in orange, light metals will be displayed in green and heavier metals (e.g. metals having a higher atomic number) may be displayed in blue. In other cases, the colour-coding may be different and/or more or fewer types of materials may be encoded using the colour-coding. "Simulated image" as used herein refers to the image corresponding to or encoded by the simulated image data and which can for example be displayed to a user (e.g. a security officer or a trainee).

Also, as the scanned objects may contain a combination of the different types of materials and may contain them only to a certain degree, the colour on the images displayed by the X-ray machines (and thus on the simulated images as well) may vary accordingly. For example, a thin layer of light metal may be represented using a colour being green but having a low saturation (e.g. appearing more grey) whereas a thicker layer of light metal may be represented using the same green colour but with a higher saturation. As an illustration, this green "colour" for light metals may be selected as being the colour (or colour range) having the "Hue" 80 and "Luminosity" 120. A thin layer of light metal could be presented by the colour having additionally the saturation value 75, whereas a thicker layer of light metal could be represented by a colour having the saturation value of 130. This example is of course for illustrative purpose and other cases the colour coding may vary differently based on the materials detected and/or on the superimposition of two or more objects or materials. For example, the saturation, hue and/or luminosity may be varied depending on the type of material, thickness and/or any superimposition with other objects.

In the present disclosure, the expression X-ray machine is used to refer to a system which includes at least one X-ray scanner. An X-ray scanner can scan objects using one or more emitters and one or more sensors. The one or more emitters can emit an X-ray beam, or X-rays, and the one or more sensors can detect the beam, or X-rays. When objects are placed on the beam's path, these objects can modify the beam (e.g. by absorbing and/or deflecting at least parts of the beam) and the one or more sensors receive and detect the modified beam. Based on the beam or X-rays detected at the one or more sensors, the X-ray scanner can generate an image of the object. In some cases, the generated X-ray image can be displayed as a 2D image in grey-scale and in other cases, the generated X-ray image data will comprise image data from different detectors and/or beams (e.g. can comprise image data from two separate detectors). For example, an X-ray scanner can have more sensors than emitters. As an illustration, the X-ray scanner can comprise one emitter and two sensors wherein the two sensors are arranged to detect the beam at different angles or may be sensors of a two-layer detector. In a two layer detector, the two sensors can be separated by an intermediate layer, e.g. a metallic layer. The beam will first be detected by the first sensor before going through the intermediate layer. The second sensor will detect the beam after it has been through the intermediate layer (where for example part of the beams may have been absorbed). Such a two-layer detector can for example be used to measure the density of a scanned object. As will be understood by the skilled person, the scanner may comprise any other combination of numbers of emitters and sensors. Additionally, more than two sensors can be used in other examples of layered sensors arrangements. Also, one X-ray machine may comprise one or more X-ray scanners. For example, an X-ray machine may comprise one X-ray scanner, a computer (or another type of processing unit) for processing the measurements or X-ray raw image data obtained from the X-ray scanner and a display to output an image as generated by the computer or processing unit based on the X-ray raw image data.

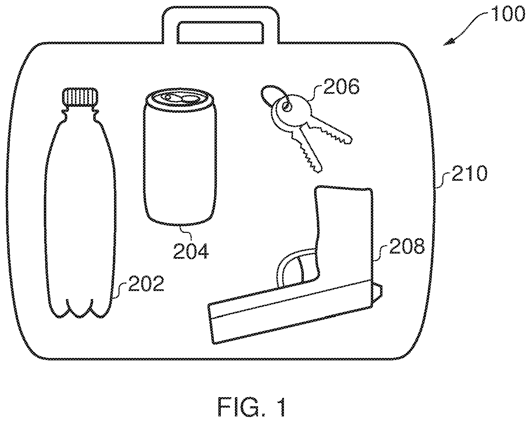

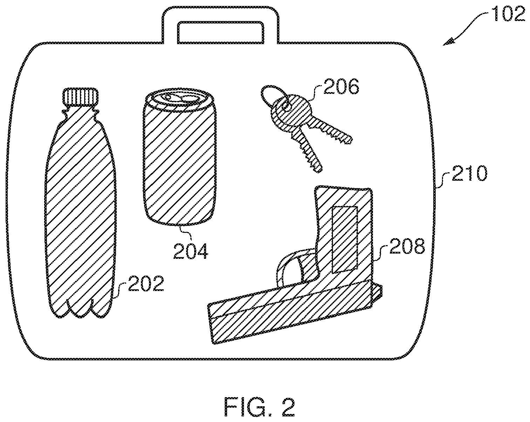

Figures 1-3 can be used to illustrate a scanning process in simplified form to facilitate understanding of the present teachings. Figure 1 is an illustration of baggage to be scanned. A set of items 100 to be scanned is illustrated, wherein set 100 comprises a suitcase 210 and wherein the suitcase contains a plastic bottle 202, an aluminium can 204, a set of keys 206 and a gun 208. The objects 202-208 are shown in Figure 1 for illustrative purposes only as they are likely not to be visible when inside the suitcase 210. Figure 2 is a schematic illustration of an X-ray image in grey-scale, wherein the grey colouring has been illustrated with hashed surfaces. In this simplification of a grey-scale image, the closeness between the hash lines indicates the luminosity of the grey colouring (e.g. the closer the lines are, the darker the grey is). In an actual X-ray scan image, the grey colouring is likely to be more variable within each item and the suitcase would also likely cause the X-ray scan image 102 to increase the darkness of the grey colour for the entire area of the suitcase 210 (due to the top and bottom sides of the suitcase above and below the objects absorbing at least part of the X-rays). However, the X-ray scan image 102 has been simplified to a schematic representation for illustrative purposes only and the skilled person will be able to understand how this schematic illustration relates to a real grey-scale X-ray scan image. The grey colouring of the objects will be affected based on at least how much (if any) of the X-ray beam is absorbed by the objects of the set 100. For example, a dense and/or thick object may absorb a large amount of X-rays and thus appears in the X-ray scan image in a dark grey whereas a low-density and/or thin object may absorb a smaller amount of X-rays and thus appears in the X-ray scan image in a lighter grey colour.

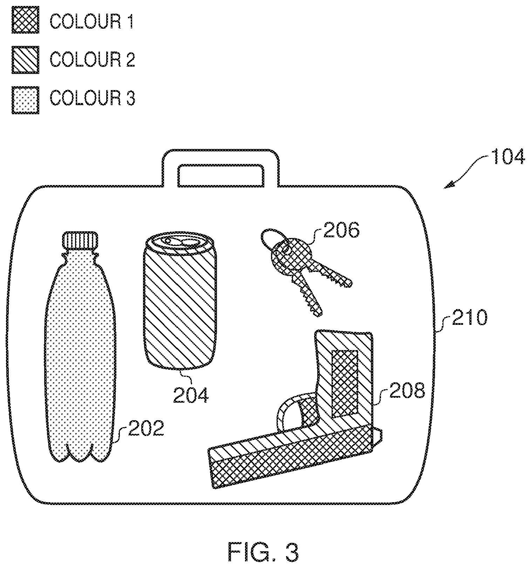

Figure 3 is a schematic illustration of an X-ray image with colour-coding for example displayed by an X-ray machine or a simulated X-ray image. In this example X-ray coloured image 104, organic materials will be displayed in "colour3", light metals in "colour2" and heavier metals in "colour1". In this illustration, the plastic bottle 202 will appear in colour 3. In other cases, if for example the bottle including labelling or packaging comprising a metallic foil (e.g. an aluminium foil), corresponding parts of the bottle 202 may also include colour2. Additionally, the colour may vary depending on the thickness or density of the material in different parts of the object. For example, the top part of the bottle 202 (e.g. including the cap) and the bottom part (e.g. the pressure resisting part which may be ribbed or crenelated) are thicker or denser, they may appear in a different variation of colour3. For example, the colour may be gradually darker and/or more saturated when approaching these areas. The aluminium can 204 would be represented in colour2 as it is made of a light metal whereas the set of keys 206 may be made of heavier metal and thus be represented with colour1. The gun 208 may comprise parts made of light metal and parts made of heavy metal and may thus include parts represented with colour2 and parts represented with colour1, respectively. Also, with a view to improving the clarity of Figure 3, the colouring for the suitcase 210 has not been represented but the suitcase 210 would normally be expected to be represented in image 104.

In view of and in addition to the above discussion, it should be clear that colour1, colour2 and colour3 do not refer to single colours as such but to ranges of colour. With a view to being more identifiable by a security officer, it may be appropriate for the colour range to be identifiable by an individual as being in the same family or to identify the degree to which the colour relate to a type of material or another one. For example, if a colour range is used for representing light metals (e.g. a range of colours all generally identified as "blue" or "green") while another colour range is used for representing heavy metals (e.g. a range of colours all generally identified as "green", "black" or "blue"), some intermediate metals may be represented with a colour which is a combination of blue and green, e.g. a turquoise, cyan or aquamarine colour. The skilled person can determine the desired colour coding based on his knowledge of the human mind's identification of colours and on the desirability of having some types of materials more easily identifiable. For example, for airport security it is likely that heavy metals (e.g. for weapons) and organic materials (e.g. for explosive) will be represented with an easily identifiable colour and the colouring code may be selected accordingly.

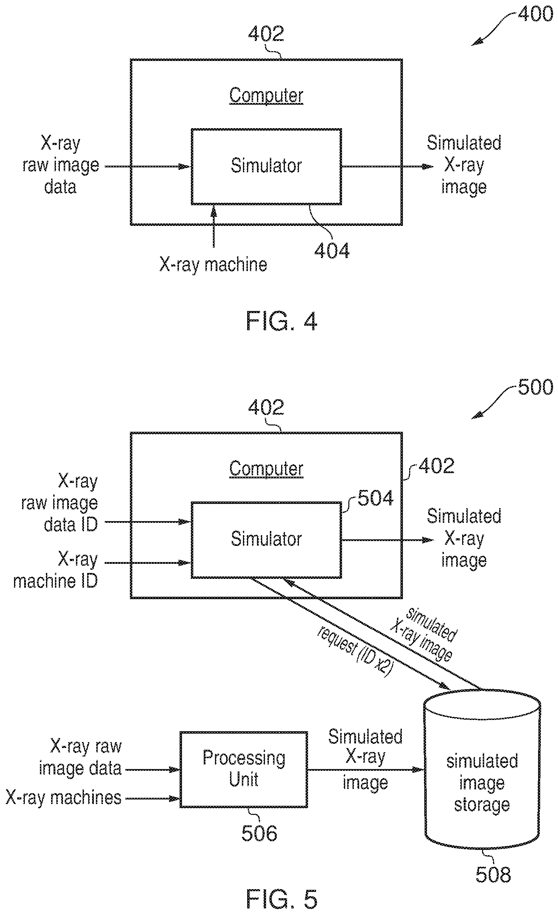

Figure 4 is an illustration of a simplified X-ray emulator within a system 400. In this illustration, the system 400 comprises a computer 402 running an emulator software client 404 ("emulator"). The emulator 404 receives as an input X-ray raw image data, as well as an indication of the X-ray machine to be emulated. The emulator 404 then generates an emulated X-ray image to be output to a user. In some cases the emulator 404 will receive the X-ray raw image data as such, for example from a memory element connected to or part of the computer 402 (e.g. a CD or a USB stick) or from a remote element (e.g. via a network). In other cases, the emulator 404 will include the X-ray raw image data. Also, the emulator 404 may also only receive first an indication of the X-ray raw image data to process rather than the raw image data. For example, a user using the emulator 404 may indicate which specific raw image data to use (in which case the emulator 404 may receive an identification of these specific raw image data) or may indicate that they wish to be trained on random raw images from the raw images that they are allowed to use. Based on this indication, the emulator 404 may then retrieve (e.g. locally or remotely) the relevant raw image data to be processed to generate the simulated image.

In the present disclosure, "supported" X-ray machine refers to an X-ray machine that can be emulated by the emulator and which may thus be selected by a trainee for generating simulated image data. With such a system, a user can be trained on any X-ray machine supported by the emulator 404 without having to purchase or use the actual X-ray machine and can train on all possible combinations of X-ray raw image data and X-ray machines available in the software. However, such a computer program is complex and requires high processing capabilities to operate as it is capable of processing any of the X-ray image data according to any of the X-ray machines supported and to generate corresponding simulated X-ray image data. It can therefore be limited in its use and it may not be suitable for all types of computers or devices (e.g. smartphones of tablets) or for all types of environments. It would therefore be desirable to provide an emulator which improves on emulator 404 in view of at least such limitations.

One possible arrangement to provide an emulator using less processing power is to prepare simulated image data for each and every possible combination of raw image data and supported X-ray machine in advance, as illustrated in Figure 5. As a result, the emulator may no longer be required to process raw image data to generate simulated image data. Instead, the emulator can request simulated image data for a combination of a specific X-ray machine and specific X-ray raw image data. In the illustration of Figure 5, the system 500 comprises a computer 402 in which an emulator 504 is installed and/or running. The emulator 504 is arranged to receive an identifier for an X-ray raw image data ("X-ray raw image ID") and an identifier for the X-ray machine ("X-ray machine ID") to be emulated. In some cases the inputs for the X-ray raw image data ID and/or X-ray machine ID can be manually input by a third party (e.g. a user or a remote element) while in other cases, the ID(s) may be generated by the emulator 504 itself (e.g. based on user preferences and/or random factors). Once the emulator 504 has received the identifiers for the raw image data and X-ray machine pair, it can request the corresponding simulated image. For example, as illustrated in Figure 5, the request may be sent to a storage unit for simulated image data 508 wherein the request identifies the "raw X-ray image, X-ray machine" pair. The simulated image storage 508 stores simulated X-ray image data generated, by a processing unit 506 for example, from one or more X-ray raw image data and one or more X-ray machines. In response to the request or query, the simulated image storage 508 can return the simulated X-ray image to the emulator 504. The emulator 504 may then display the simulated X-ray image to the user, for example for security training on the X-ray machine.

In other cases the simulated image data may be stored locally with the emulator. Such an arrangement may for example be more appropriate for cases where the emulator is running with a low number of X-ray image data and emulated machines. For a larger scale arrangement, it may be more appropriate to use larger remote storage for storing the simulated image data. Some arrangements may involve a combination of both these options: the emulator may for example download a subset of the simulated image data from the simulated image storage (e.g. during the night) and may be using only locally-stored simulated image data when running the program in training mode.

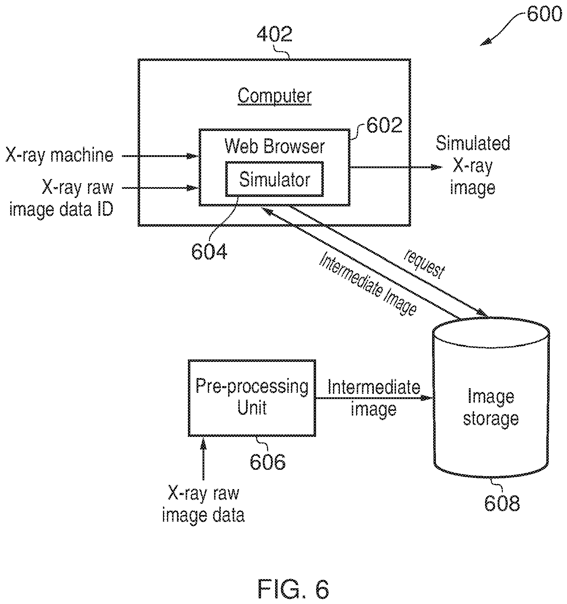

An emulator as illustrated in Figure 5 and discussed above can be used on a number of computers and devices and in other types of environments having limited processing capabilities available for the emulator, which can be beneficial compared to the arrangement illustrated in Figure 4. However, a drawback of this arrangement is that it requires a large amount of data storage, as the number of images to be prepared increases with the number of raw X-ray images and with the number of emulated X-ray machines. Also, in this arrangement each pre-prepared and stored simulated image data is likely to only be used infrequently (as it would only be used when a user selects the specific combination of the corresponding raw image data and the corresponding X-ray machine) and the use of the memory resources may thus not be very efficient. Therefore this arrangement provides a system where the processing power required for the emulator can be drastically reduced while, on the other hand, the required storage capabilities may be very large (and thus expensive) for a possibly inefficient and infrequent use of the data stored. In other words, even though this arrangement has clear advantages, in particular in respect of the simplification of the emulator, it may also create new limitations or disadvantages with respect to the storage and management of the image data. Figure 6 is an illustration of another system in accordance with the present disclosure. Figure 6 illustrates an alternative system 600 wherein this alternative system provides advantages over the system 400 discussed in respect of Figure 4 while requiring significantly less storage compared to the system 500 discussed above in respect of Figure 5. In the arrangement of Figure 6, the system 600 comprises an emulator 604 installed as a plug-in on a web browser 602 or using a plug-in installed on the web browser 602 which can be executed or run on a computer 402. The emulator 604, like the emulator 404 of Figure 4 or the emulator 504 of Figure 5, is arranged to generate a simulated X-ray image based on a selected X-ray machine and selected X-ray raw image data. However, in this system 600, X-ray raw image data is first pre-processed, for example in advance, by the pre-processing unit 606 which is operable to generate intermediate image data. The intermediate image data are neither raw image data nor simulated image data but comprises pre-processed image data encoding types of material identified from the X-ray raw. The "intermediate image data" may thus also be referred to as "intermediate data". In other words, this intermediate image data does not encode actual image data (e.g. colour data for the pixels) but encodes material data for the pixels and/or regions in the corresponding X-ray raw image. For example the pre-processed unit may identify that a first scanned object is made of an organic material while a second scanned object is made of a combination of light and heavy metals. It may thus generate intermediate or pre-processed image data wherein, for the image portions corresponding to the first scanned object are represented with data identifying the organic material while image portions corresponding to the second scanned object are represented with data identifying the combination of light and heavy metals. Examples of intermediate image data are illustrated and discussed further below. The intermediate image data corresponding to the raw image data are then stored in the image storage, or image data storage, 608. For example the image storage may be provided by one or more databases.

When emulator 604 generates simulated X-ray image data, for example if it has received an indication of the X-ray machine to be emulated and has identified the X-ray raw image to be used, it can send a request to the image storage 608 for the intermediate image data (e.g. corresponding to the raw image data previously identified, if any). The image storage 608 can return the intermediate image data to the emulator 604 for generation of the corresponding simulated image. In the example of Figure 6, the emulator is running as a plug-in in a web-browser, therefore the requests to and response from the image storage 608 may be communicated directly to/from the emulator 604 or may be communicated via the web browser 602 (as illustrated in the example of Figure 6). Once the emulator 604 has received the intermediate image data, it can generate simulated image data based on the pre-processed image data and on the selected X-ray machine. For example, based on a colour-coding for the selected X-ray machine, and on the intermediate image data identifying the types of material in the image, the emulator 604 can apply the appropriate colouring to the image. Therefore, the amount of processing required from the emulator 604 has been reduced compared to the emulator 404 of system 400, thereby providing a much thinner application or client for the user to train on. On the other hand, the amount of storage required for system 600 has been much reduced compared to system 500, therefore improving the cost- and storage-usage-efficiency of the overall system. For example, the minimum amount of storage required increase linearly with the number of raw X-ray images, whereas the minimum amount of storage required in system 500 increase linearly with the number of raw X-ray images and linearly with the number of X-ray machines.

Arrangements having a lighter client or emulator, for example arrangements illustrated in figures 5 and 6, enable new uses for the emulator. For example, the emulator may be implemented as a tablet or smartphone application ("app") even though smartphone or tablet devices may have much less processing capabilities than a personal computer ("PC"). In other examples, the emulator may be implemented as a web application, e.g. executable using a web browser. For example, a user can access the emulator by opening a web browser, launching a URL (e.g. http://emulator.com/lauch.html). The emulator may be running in a web page with or without the use of an additional browser plug-in or extension. Examples of web browser plug-ins or extensions include "Silverlight", "Flash" or "Java" (some or all of which may be protected by trademarks). For example, the emulator may be running as a Silverlight or Java application within the web browser and which is launched when a user accesses the corresponding URL using a web browser. The emulator may then provide an interface for the user while communicating with any appropriate remote element, e.g. via the internet and it may be operable to receive simulated image data and/or intermediate image data. In the latter case, the emulator may also be operable to generate simulated image data from the intermediate image data. Once the simulated image data has been obtained (for example received from a remote element or generated by the emulator), the corresponding simulated image may be displayed by the emulator to the user, for example via the GUI, for security training.

This example can also provide a flexible arrangement as the device (e.g. PC) running the web browser may not have anything other than the web browser (and optionally the plug-in) installed on the device while still enabling the emulator to run as a web application. In contrast to an implementation using a standalone application for example, the emulator may be used on any device having an appropriate web browser installed and does not require the device to have an emulator application already installed. Thus, despite the emulator not being installed on the device, the emulator can be accessed, for example by entering a URL, and once the web page has been accessed the emulator can run locally using the web browser (and optionally using a plug-in). For example, a user can access a URL for training on airport security from a computer having a web browser, may login on the corresponding web page to identify itself as a user of the application. A successful login may trigger the launch of the emulator where the user can for example select a training session or a set of raw image data to train on. The browser may then obtain the simulated or intermediate image data, for example from a server. In the latter case, the emulator can generate the simulated image data. In some examples, such an emulator may run as a web application as a plug-in or using a plug-in of the web browser. Such processing can thus be done locally, using computing resources available to the emulator on the device, despite the emulator not being installed on the device as a stand-alone application can be.

As a result of the architectures and arrangements provided herein for generating the simulated image data, the emulator can be made lighter and less complex (e.g. requiring less computing resources) which can make a web application implementation more realistic than before without taking the risk of having an emulator which is too slow to be considered as usable or satisfactory from a user experience perspective.

Also, in a web application implementation using a plug-in or extension, the web application may be partially or entirely implemented using the plug-in or extension, for example some or all the features of the web application may be implemented using the plug-in or extension. In one example, a portion of the web application implemented using a plug-in may perform the generation of the simulated image data from obtained intermediate image data. For example the web application may rely on portions implemented using a plug-in or extension for obtaining intermediate image data, generating simulated image data based on the intermediate image data and, optionally, outputting the simulated image corresponding to the simulated image data for example by displaying the simulated image via the web browser. Additional functionalities may be provided with or without a plug-in or extension as the skilled person will recognise, such as image zooming and moving options.

Also, with a web application implementation, some (or all) of the operations or steps may be carried out by a web server and/or by another server (e.g. a Flash or Silverlight server). For example, a remote element (e.g. web, Java, Flash or Silverlight server) may obtain simulated or intermediate image data from the relevant storage and transmit the image data to the emulator. In this example, the simulated or intermediate image data obtained at the emulator and obtained via a remote element.

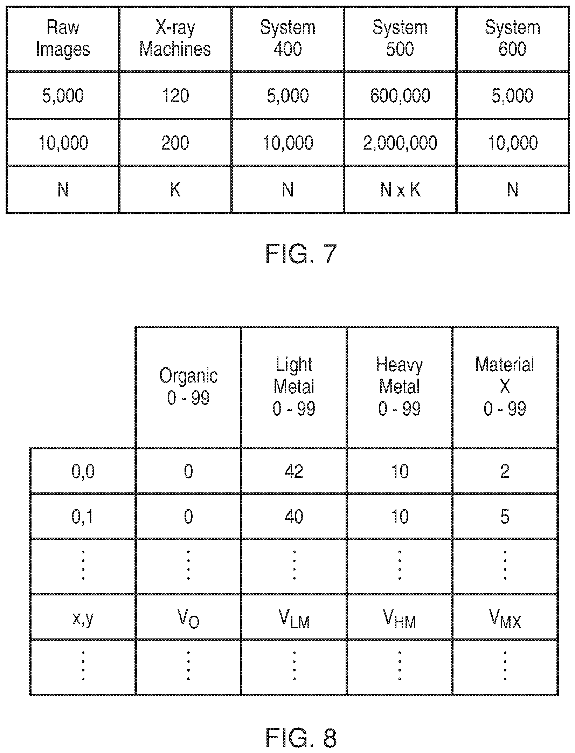

Figure 7 is an illustration of the number of raw, simulated and intermediate image data to be stored with system 400, system 500 and system 600, respectively, depending on the number of raw images and on the number of X-ray machines. For example, assuming that each raw image in system 400, each simulated image in system 500 and each intermediate image data corresponding to one X-ray raw image in system 600 is stored as one file in each case, the numbers illustrated in the table of Figure 7 show the number of files to be stored in the corresponding storage (if any). As illustrated, the storage required with system 500 is significantly more than with systems 400 or 600. In contrast, the amount of storage required with a system such as the system 600 of figure 6 is not dependent upon the number of X-ray machines available for emulation and does not fluctuate based on the number of X-ray machines. Instead, it is only dependent upon the number of raw images processed to generate intermediate image data and which are available for emulators to generate simulated image data. As a result, a system such as the system 600 illustrated in Figure 6 can be beneficial in controlling the amount of storage required for the system.

In other words, for a large-scale training system, systems 400 and 600 may then be more appropriate from a storage management perspective and, for environments where the emulator has limited processing resources available, systems 500 and 600 may then be more appropriate.

Figure 8 is a schematic illustration of the content of example intermediate image data. In this table, the lines are for pixels of the image, while the columns are for types of materials. For a pixel x,y of the image, the value VO indicates an amount of organic material detected for this pixel (for example from "0"-none to "99"-maximum), value VLM indicates an amount of light metal material detected, value VHM indicates an amount of heavy metal material detected while VMX indicates an amount of "material X" (e.g. any other type of material that may be detected) detected for this pixel. This table is a schematic illustration of the type of information that may be represented by the intermediate image data. For example, the format of the intermediate image data may vary and the skilled person can select the most appropriate format based on particular constraints and preferences. Also, the intermediate image data may for example be encoded data rather than non-encoded data, for example for data compression and/or for encryption. For example, the intermediate image data may represent a content similar to that of Figure 8 but in an encoded form (e.g. with variable length encoding and/or lossy or lossless compression) so as to reduce the amount of storage required for the image storage 608. Additionally, compression encoding would also help reducing the amount of data to be transmitted to emulators upon request.

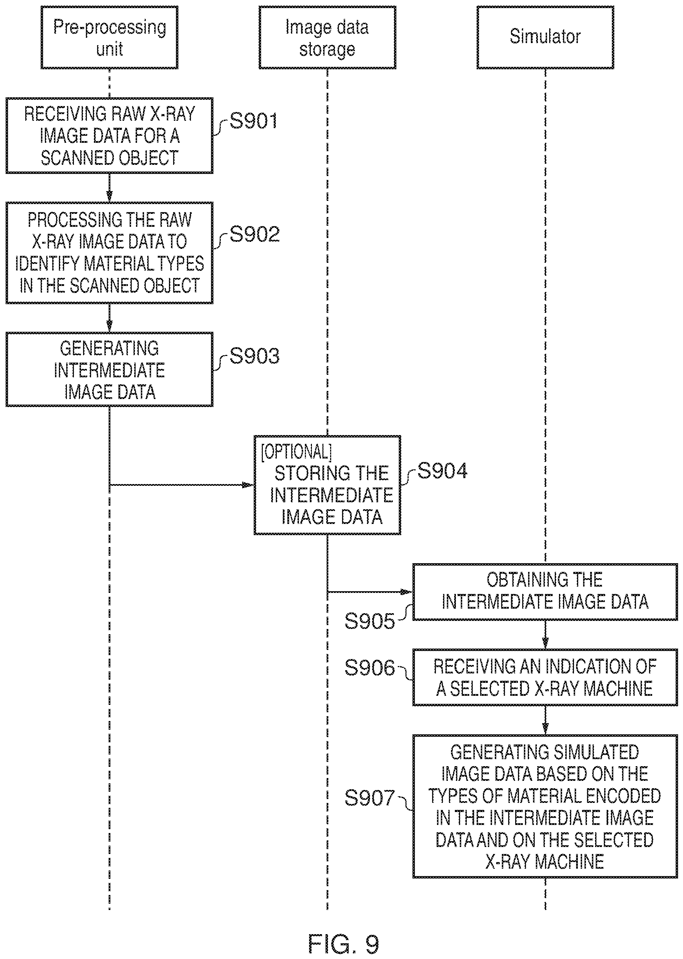

Figure 9 is an illustration of an example method in accordance with the present disclosure. At the first step S901, raw X-ray image data for a scanned object is received. Upon receipt, the raw X-ray image data is processed to identify material types in the scanned object at step S902. For example, based on X-ray raw image data obtained from one or more sensors, the raw image data may be processed to determine the density of the materials scanned. Based on the identified material types, intermediate image data is generated at step S903, wherein the intermediate image data encodes these types of material previously identified. Optionally, once the intermediate image data has been generated, it may be stored (S904) for example in image data storage. In other example, the generated intermediate image data may not be stored, for example it may be sent directly to an emulator or to another element.

At a later point in time (S905), the intermediate image data is received at the emulator, for example, upon request from the emulator or without an express request from the emulator (e.g. if intermediate image data are automatically loaded into the emulator at night for a training session the next day). In some cases, it may be received from image storage or image data storage. Before, after, or concurrently, the emulator receives an indication of a selected X-ray machine (S906). The selected X-ray machine is selected from a group of at least a first X-ray machine and a second X-ray machine, the first X-ray machine using a different representation scheme (e.g. a different colour-coding) for generating images from raw X-ray image data than the second X-ray machine. Once the emulator has received the intermediate image data and the indication of the selected X-ray machine, at step S907 the emulator generates simulated image data based on the types of material encoded in the intermediate image data and on the selected X-ray machine. The simulated image data simulates the image to be displayed on the selected X-ray machine for the raw X-ray image. In some examples, the method may further comprise a step of the emulator outputting the simulated image data. For example, the emulator may display the corresponding simulated image, may cause the corresponding simulated image to be displayed and/or may communicate the simulated image data (e.g. to a printer for printing, to a remote element for storing, etc.).

Wherever possible and appropriate, method steps discussed herein may be performed in any appropriate order and the present disclosure is not limited to carrying out steps in any specific order presented herein.

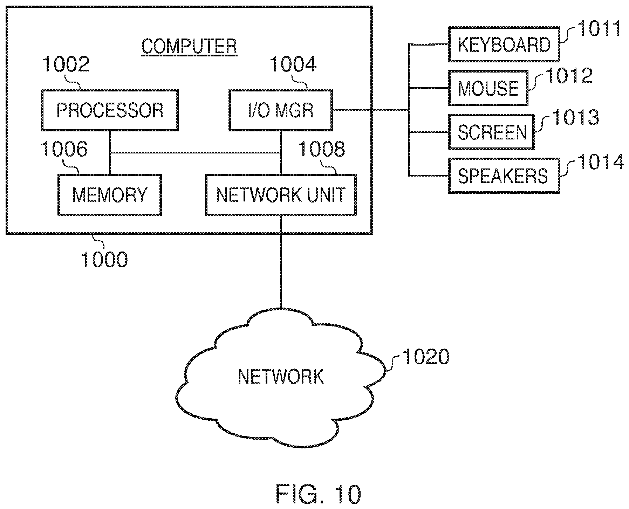

Figure 10 is an example illustration of a computer or computing device. The computer 1000 comprises a processor 1002, and input/output manager ("I/O MGR") 1004, memory 1006 and a network unit 1008 which are all directly (as illustrated in Figure 10) or indirectly (not shown in Figure 10) connected, for example via a bus. The processor is operable to carry out operations and provides processing capabilities to the computer, which may be shared between different elements (e.g. applications running on the computer, networking processing, etc.). Memory 1006 may include volatile (e.g. "RAM") and/or non-volatile (e.g. a hard disk drive) memory which may store data. The memory may for example be used by the processor when carrying operations. The I/O MGR 1004 is arranged to control and manage inputs to and outputs from the computer. For example, the I/O MGR may be connected to a variety of input and/or output devices such as a keyboard 1011, a mouse 1012, a screen 1013 or speakers 1014 as illustrated in the example of Figure 10. A touchscreen is an example of device which can be considered as both an input and output device. The network unit 1008, for example a network card, is operable to send and/or receive messages via a network 1020. The network unit 1008 may be operable to communicate over a wired or wireless connection. In some example, the network may include a private and/or public network (e.g. the internet). The network unit 1008 may for example enable communication with a remote element, for example a remote client or a remote server. In some example, the computer 1000 may not include the network unit 1008, in which case the computer may not be operable to communicate to a remote element via a network. A computer or computing device, for example as illustrated in Figure 10, may be operable to run an operating system which can be used to run applications. Examples of applications include a web browser, a word processing application, a media player etc. An application may also be operable to support extensions or plug-ins, for example a web-browser plug-in. Examples of web-browser plug-ins include a "Flash" plug-in, a "Silverlight" plug-in and a PDF viewer plug-in.

The computer 402 of Figures 4-6 may for example be in accordance with the computer illustrated as discussed above in respect of Figure 10. Likewise, the processing unit 506 of Figure 5 or the pre-processing unit 606 of Figure 6 may be implemented on such a computer or computing device. For example, in some cases the simulated image storage 508 and the image data storage 608 may be provided on the same computing device as the processing unit 506 and pre-processing unit 606, respectively. In examples, the processing unit 506, simulated image storage 508, pre-processing unit 606 and/or image data storage 608 may be provided on a more than one computer, for example due to any combination of: resilience implementations, load management across a plurality of computing devices and a distributed system arrangement (e.g. an implementation on "the cloud").

The emulator according to the present disclosure is not limited to a stand-alone or plug-in (or "plugin") form and may be provided in any appropriate form, for example as determined by the skilled person based on specific circumstances or preferences. In some examples, the emulator may be provided as a software- or hardware-based element, a stand-alone element, a plug-in for another element or application (e.g. a web browser), as a thin or light client, a combination of one or more elements, a functionality or sub-part of another element, etc. If a computer program is provided which, when executed, provides an emulator and/or pre-processing unit in accordance with the present disclosure, the computer program may be provided on a transitory or non-transitory computer usable medium. Also, an emulator according to the present disclosure is not limited to an emulator running on a computer. An emulator may for example be provided in a stand-alone hardware element, may be running on a computer, server, phone, smartphone, tablet or other device having processing capabilities, or may be provided on any other suitable element.

In the present disclosure, displaying an image may involve some form or decoding image data. For example if image data is provided in a "JPG" or "PNG" format, display of the image may be caused for example by sending encoded image data or by sending corresponding decoded image data to a display element or function. Additionally, even though the above discussions may appear to relate mainly to still images, the present invention is not limited to still image but relates to any type of images. For example the same teachings, architectures and systems may be used with video images, which can be seen as a sequence of still images. For example, the raw X-ray image and image data may also be raw X-ray video and video data, respectively; the intermediate X-ray image data may also be intermediate X-ray video data; and the simulated X-ray image and image data may also be simulated X-ray video and video data, respectively. The present disclosure can also be beneficial when using video images as they can require more computing resources when being processed than still images. Thus providing an arrangement which may be used when less computing resources are available can thus increase the number of environments which can be considered for implementing an emulator.

Wherever appropriate and suitable, processing or pre-processing of raw image data as discussed herein may be carried out in advance and/or on request. For example, in some examples, all the pre-processing may be carried out in advance before the intermediate image data may be required. In other examples intermediate image data may only be prepared upon request, for example in cases where the intermediate image data is not stored (e.g. it may be re-generated at each request) or in cases where the data are stored (such that only previously requested intermediate image data are available in storage). Other examples may be based on a combination of automatic or on-request generation of intermediate image data. For example, the system may be designed such that in most cases the intermediate image data will have been prepared in advance and be available for example from image data storage and, in cases where intermediate image data has been requested which has not been previously generated, it can then be generated on-demand (and for example may then be stored for later use).

In the present disclosure, the terms "storage" and "store" can be used interchangeably as appropriate and may refer to, in some examples, one or more storage units or storage medium. The image or image data storage discussed herein may also be any type of appropriate storage. For example, the storage may be provided by one or more databases, on a distributed or non-distributed architecture, or on non-volatile or volatile memory. Also, the storage may be on a short time-scale (e.g. if images or images data are temporarily stored or cached) or on a longer timescale (e.g. for the images or image data to remain available on a non-temporary basis).

Additionally, wherever appropriate, when an emulator is described as receiving intermediate image data, it may first receive an identifier for the intermediate image data before the intermediate image data itself. For example, the emulator may first receive or obtain an identifier ("ID") uniquely identifying the image data which enable the emulator to retrieve the image data (e.g. it may receive or obtain a storage ID and an image data ID to be used within the storage having this ID). Also, in some cases, the image data or image data identifier may be obtained from an external element or from the emulator itself. For example, the emulator may determine on which raw X-ray image data the next simulated image should be based before it requests and receives the corresponding intermediate image data. In another example, the selection of the raw image data may be made by another element (e.g. a remote server). The element selecting the raw image data to be simulated may base the selection on any combination of a random element, a user preference, a user subscription, a tracking record of raw image data previously used, a training program or session or any other appropriate parameter.

Also, the raw image data may be obtained from any suitable source. In some examples, at least some of the raw image data used by the system may be obtained from a generator, e.g. a computer program. In other examples, the raw image data may be obtained from actual X-ray machine, for example used at security checks at airports or buildings. The latter option can be advantageous as the raw X-ray data corresponds to real-life examples which may improve the quality and realism of the training.

In the present disclosure, X-ray refers to any electromagnetic radiation in the X-radiation such as X-ray radiations in the 1 pm (picometers) to 10 nm (nanometers) wavelength range, or the 10 pm (picometers) to 10 nm (nanometers) wavelength range. It also refers to any radiations or combination of radiations generally referred to as "soft X-rays" or hard X-rays". Preferably, for airport security, hard X-rays may be preferred because of their more advantageous properties (e.g. reduced absorption compared to soft X-rays, etc.) as the skilled person will be able to recognise.

An example approach in accordance with the present teachings can provide a method for emulating an X-ray scanning machine, the method comprising receiving raw X-ray image data for a scanned object; processing the raw X-ray image data to identify material types in the scanned object; generating intermediate image data wherein the intermediate image data encodes the types of material identified at the processing step; receiving, at an emulator, the intermediate image data; receiving, at the emulator, an indication of a selected X-ray machine to be emulated, wherein the selected X-ray machine is selected from a group comprising at least a first X-ray machine and a second X-ray machine, the first X-ray machine using a different representation scheme for generating images from raw X-ray image data than the second X-ray machine; and generating, at the emulator, simulated image data based on the types of material encoded in the intermediate image data and on the selected X-ray machine, the simulated image data simulating the image to be displayed on the selected X-ray machine for the raw X-ray image data.

Various further examples in accordance with the present teachings are set out in the following numbered clauses:
Clause 1. A method for emulating an X-ray scanning machine, the method comprising: receiving raw X-ray image data for a scanned object; processing the raw X-ray image data to identify material types in the scanned object; generating intermediate image data wherein the intermediate image data encodes the types of material identified at the processing step; receiving, at an emulator, the intermediate image data; receiving, at the emulator, an indication of a selected X-ray machine to be emulated, wherein the selected X-ray machine is selected from a group comprising at least a first X-ray machine and a second X-ray machine, the first X-ray machine using a different representation scheme for generating images from raw X-ray image data than the second X-ray machine; and generating, at the emulator, simulated image data based on the types of material encoded in the intermediate image data and on the selected X-ray machine, the simulated image data simulating the image to be displayed on the selected X-ray machine for the raw X-ray image data.
Clause 2. A method according to clause 1, wherein the method comprises, after generation of the intermediate image data, storing the intermediate image data in image data storage.
Clause 3. A method according to clause 1 or 2, wherein the method comprises outputting, by the emulator, the simulated image data.
Clause 4. A method according to any preceding clause, wherein the emulator is a web-browser based client and, optionally, wherein the emulator is a web-browser plug-in or implemented using a web-browser plug-in.
Clause 5. A method according to any preceding clause, wherein the emulator is implemented as a smartphone application or a tablet application.
Clause 6. A system for emulating an X-ray scanning machine, the system comprising:
   a pre-processing unit arranged to: process raw X-ray image data for a scanned object to identify material types in the scanned object, and generate intermediate image data wherein the intermediate image data encodes the types of material identified by the pre-processing unit; and
   an emulator arranged to: receive the intermediate image data, receive an indication of a selected X-ray machine to be emulated, wherein the selected X-ray machine is selected from a group comprising at least a first X-ray machine and a second X-ray machine, the first X-ray machine using a different representation scheme for generating images from raw X-ray image data than the second X-ray machine, and generate simulated image data based on the types of material encoded in the intermediate image data and on the selected X-ray machine the simulated image data simulating the image to be displayed on the selected X-ray machine for the raw X-ray image data.
Clause 7. A system according to clause 6, wherein the system comprises image data storage arranged to store intermediate image data and wherein the emulator is arranged to receive the intermediate image data from the image data storage.
Clause 8. A system according to clause 6 or 7, wherein the emulator is further arranged to output the simulated image data.
Clause 9. A system according to any of clauses 6 to 8, wherein the emulator is a web-browser based client and, optionally, wherein the emulator is a web-browser plug-in or implemented using a web-browser plug-in.
Clause 10. A system according to any of clauses 6 to 9 wherein the emulator is implemented as a smartphone application or a tablet application.
Clause 11. A computer program comprising instructions for causing a programmable computer to carry out a method according to any of clauses 1 to 5.
Clause 12. A computer program product comprising a computer usable medium having a computer readable program code embodied therein, the computer readable program code for performing the steps of: receiving raw X-ray image data for a scanned object; processing the raw X-ray image data to identify material types in the scanned object; generating intermediate image data wherein the intermediate image data encodes the types of material identified at the processing step; receiving, at an emulator, the intermediate image data; receiving, at the emulator, an indication of a selected X-ray machine to be emulated, wherein the selected X-ray machine is selected from a group comprising at least a first X-ray machine and a second X-ray machine, the first X-ray machine using a different representation scheme for generating images from raw X-ray image data than the second X-ray machine; and generating, at the emulator, simulated image data based on the types of material encoded in the intermediate image data and on the selected X-ray machine, the simulated image data simulating the image to be displayed on the selected X-ray machine for the raw X-ray image data.
Clause 13. A method for emulating an X-ray scanning machine, the method comprising: receiving intermediate image data corresponding to raw X-ray image data for a scanned object, wherein the intermediate image data encodes types of material in the scanned object; receiving an indication of a selected X-ray machine to be emulated, wherein the selected X-ray machine is selected from a group comprising at least a first X-ray machine and a second X-ray machine, the first X-ray machine using a different representation scheme for generating images from raw X-ray image data than the second X-ray machine; and generating simulated image data based on the types of material encoded in the intermediate image data and on the selected X-ray machine, the simulated image data simulating the image to be displayed on the selected X-ray machine for the raw X-ray image data.
Clause 14. A method according to clause 13, wherein the method comprises outputting the simulated image data.
Clause 15. A method according to clause 13 or 14, wherein the method is carried out by a web-browser based client and, optionally, wherein the method is carried out by a web-browser plug-in or using a web-browser plug-in.
Clause 16. A method according to any of clauses 13 to 15 wherein the method is carried out by a smartphone application or a tablet application.
Clause 17. An emulator for emulating an X-ray scanning machine, the emulator being arranged to: receive intermediate image data corresponding to raw X-ray image data for a scanned object, wherein the intermediate image data encodes types of material in the scanned object; receive an indication of a selected X-ray machine to be emulated, wherein the selected X-ray machine is selected from a group comprising at least a first X-ray machine and a second X-ray machine, the first X-ray machine using a different representation schemes for generating images from raw X-ray image data than the second X-ray machine; and generate a simulated image data based on the types of material encoded in the intermediate image data and on the selected X-ray machine, the simulated image data simulating the image to be displayed on the selected X-ray machine for the raw X-ray image data.
Clause 18. An emulator according to clause 17, wherein the emulator is further arranged to output the simulated image data.
Clause 19. An emulator according to clause 17 or 18, the emulator being a web-browser based client and, optionally, being a web-browser plug-in or implemented using a web-browser plug-in.
Clause 20. An emulator according to any of clauses 17 to 19, the emulator being a smartphone application or a tablet application.
Clause 21. A computer program comprising instructions for causing a programmable computer to carry out a method according to any of clauses 13 to 16.
Clause 22. A computer program product comprising a computer usable medium having a computer readable program code embodied therein, the computer readable program code for performing the steps of: receiving intermediate image data corresponding to raw X-ray image data for a scanned object, wherein the intermediate image data encodes types of material in the scanned object; receiving an indication of a selected X-ray machine to be emulated, wherein the selected X-ray machine is selected from a group comprising at least a first X-ray machine and a second X-ray machine, the first X-ray machine using a different representation scheme for generating images from raw X-ray image data than the second X-ray machine; and generating simulated image data based on the types of material encoded in the intermediate image data and on the selected X-ray machine, the simulated image data simulating the image to be displayed on the selected X-ray machine for the raw X-ray image data.
Clause 23. A computer program product according to clause 22, wherein the computer readable program code is further for performing the steps of outputting the simulated image data.
Clause 24. A computer program product according to clause 22 or 23, wherein the computer readable program code is for a web-browser based client and, optionally, wherein the computer readable program code is for a web-browser plug-in or implemented using a web-browser plugin.
Clause 25. A computer program product according to any of clauses 22 to 24, wherein the computer readable program code is for a smartphone application or a tablet application,
Clause 26. A method for preparing for emulation of an X-ray scanning machine, the method comprising: receiving raw X-ray image data for a scanned object; processing the raw X-ray image data to identify material types in the scanned object; and generating intermediate image data wherein the intermediate image data encodes the types of material identified at the processing step.
Clause 27. A method according to clause 26, wherein the method comprises, after generation of the intermediate image data, storing the intermediate image data in image data storage.
Clause 28. A pre-processing system for preparing for emulation of an X-ray scanning machine, the pre-processing system being arranged to: receive raw X-ray image data for a scanned object; process the raw X-ray image data to identify material types in the scanned object; and generate intermediate image data wherein the intermediate image data encodes the types of material identified at the processing step.
Clause 29. A pre-processing system according to clause 28, wherein the pre-processing system comprises image data storage arranged to store intermediate image data.
Clause 30. A computer program comprising instructions for causing a programmable computer to carry out a method according to clause 26 or 27.
Clause 31. A computer program product comprising a computer usable medium having a computer readable program code embodied therein, the computer readable program code for performing the steps of: receiving raw X-ray image data for a scanned object; processing the raw X-ray image data to identify material types in the scanned object; and generating intermediate image data wherein the intermediate image data encodes the types of material identified at the processing step.
Clause 32. A method according to clause 31, the computer readable program code being for performing the step of: after generation of the intermediate image data, storing the intermediate image data in image data storage.

Also, the verb "include" is used herein as having the same meaning as "comprise" and, when discussing alternatives, the term "or" should be construed as meaning "and/or" wherever possible. The present invention is not limited to the embodiments discussed above and is defined by the appended claims. Variations to the above arrangements may be made while remaining within the content of the present disclosure, and any generalisation discussed above in respect of a particular arrangement is also hereby expressly considered as being disclosed for any other arrangements, where technically appropriate, without departing from the disclosure and teachings of the present disclosure.

## Claims

1. A method for emulating an X-ray scanning machine, the method being **characterised in that** it comprises:
receiving intermediate image data corresponding to raw X-ray image data for a scanned object (202, 204, 206, 208), wherein the intermediate image data encodes types of material in the scanned object;
receiving an indication of a selected X-ray machine to be emulated, wherein the selected X-ray machine is selected from a group comprising at least a first X-ray machine and a second X-ray machine, the first X-ray machine using a different representation scheme for generating images from raw X-ray image data than the second X-ray machine; and
generating simulated image data based on the types of material encoded in the intermediate image data and on the selected X-ray machine, the simulated image data simulating the image to be displayed on the selected X-ray machine for the raw X-ray image data.

2. A method according to claim 1, wherein the method comprises outputting the simulated image data.

3. A method according to claim 1 or 2, wherein the method is carried out by a web-browser based client and, optionally, wherein the method is carried out by a web-browser plug-in or using a web-browser plug-in.

4. A method according to any of claims 1 to 3 wherein the method is carried out by a smartphone application or a tablet application.

5. A method for preparing for emulation of an X-ray scanning machine according to claim 1, the method comprising:
receiving raw X-ray image data for a scanned object;
processing the raw X-ray image data to identify material types in the scanned object; and
generating intermediate image data wherein the intermediate image data encodes the types of material identified at the processing step.

6. A method according to claim 5, wherein the method comprises, after generation of the intermediate image data, storing the intermediate image data in image data storage.

7. A method for emulating an X-ray scanning machine, the method comprising:
preparing for emulation of an X-ray scanning machine according to the method of claim 5 or 6; and
at an emulator, emulating an X-ray scanning machine according to the method of any of claims 1 to 4, using the intermediate image data generated by the preparing.

8. An emulator for emulating an X-ray scanning machine, the emulator being **characterised in that** it is arranged to:
receive intermediate image data corresponding to raw X-ray image data for a scanned object, wherein the intermediate image data encodes types of material in the scanned object;
receive an indication of a selected X-ray machine to be emulated, wherein the selected X-ray machine is selected from a group comprising at least a first X-ray machine and a second X-ray machine, the first X-ray machine using a different representation schemes for generating images from raw X-ray image data than the second X-ray machine; and
generate a simulated image data based on the types of material encoded in the intermediate image data and on the selected X-ray machine, the simulated image data simulating the image to be displayed on the selected X-ray machine for the raw X-ray image data.

9. An emulator according to claim 8, wherein the emulator is further arranged to output the simulated image data.

10. An emulator according to claim 8 or 9, the emulator being a web-browser based client and, optionally, being a web-browser plug-in or implemented using a web-browser plug-in.

11. An emulator according to any of claims 8 to 10, the emulator being a smartphone application or a tablet application.

12. A pre-processing system for preparing for emulation of an X-ray scanning machine according to claims 8 to 11, the pre-processing system being arranged to:
receive raw X-ray image data for a scanned object;
process the raw X-ray image data to identify material types in the scanned object; and
generate intermediate image data wherein the intermediate image data encodes the types of material identified at the processing step.

13. A pre-processing system according to claim 12, wherein the pre-processing system comprises image data storage arranged to store intermediate image data.

14. A system for emulating an X-ray scanning machine, the system comprising:
a pre-processing system according to claim 12 or 13; and
an emulator according to any of claims 8 to 11, configured to receive the intermediate image data from the pre-processing system.

15. A computer program comprising instructions for causing a programmable computer to carry out a method according to any of claims 1 to 7.

## Patentansprüche

1. Verfahren zum Emulieren einer Röntgen-Scanningmaschine, wobei das Verfahren **dadurch gekennzeichnet ist, dass** es umfasst:
Empfangen von intermediären Bilddaten, die rohen Röntgen-Bilddaten für ein gescanntes Objekt (202, 204, 206, 208) entsprechen, wobei die intermediären Bilddaten Arten von Material im gescannten Objekt kodieren;
Empfangen einer Anzeige eines gewählten Röntgengerätes, das emuliert werden soll, wobei das gewählte Röntgengerät aus einer Gruppe ausgewählt wird, die mindestens ein erstes Röntgengerät und ein zweites Röntgengerät umfasst, wobei das erste Röntgengerät ein anderes Repräsentationsschema zum Erzeugen von Bildern aus rohen Röntgenbilddaten verwendet, als das zweite Röntgengerät; und
Erzeugen von simulierten Bilddaten auf der Basis der Arten von Material, die in den intermediären Bilddaten und auf dem gewählten Röntgengerät kodiert sind, wobei die simulierten Bilddaten das Bild simulieren, das auf dem gewählten Röntgengerät für die rohen Röntgenbilddaten angezeigt werden soll.

2. Verfahren nach Anspruch 1, wobei das Verfahren das Ausgeben der simulierten Bilddaten umfasst.

3. Verfahren nach Anspruch 1 oder 2, wobei das Verfahren durch einen Web-Browser-basierten Client ausgeführt wird und optional, wobei das Verfahren von einem Web-Browser-Plug-in oder durch Verwendung eines Web-Browser-Plug-ins ausgeführt wird.

4. Verfahren nach einem der Ansprüche 1-3, wobei das Verfahren durch eine Smartphone-Applikation oder eine Tablet-Applikation ausgeführt wird.

5. A Verfahren zum Vorbereiten auf die Emulation einer Röntgen-Scanningmaschine nach Anspruch 1, wobei das Verfahren umfasst:
Empfangen von rohen Röntgen-Bilddaten für ein gescanntes Objekt;
Verarbeiten der rohen Röntgen-Bilddaten zum Identifizieren von Materialarten im gescannten Objekt; und
Erzeugen von intermediären Bilddaten, wobei die intermediären Bilddaten die Arten von Material kodieren, die beim Verarbeitungsschritt identifiziert werden.

6. Verfahren nach Anspruch 5, wobei das Verfahren, nach der Erzeugung der intermediären Bilddaten, das Speichern der intermediären Bilddaten im Bilddatenspeicher umfasst.

7. Verfahren zum Emulieren einer Röntgen-Scanningmaschine, wobei das Verfahren umfasst:
Vorbereiten auf die Emulation einer Röntgen-Scanningmaschine nach dem Verfahren von Anspruch 5 oder 6; und
bei einem Emulator, Emulieren einer Röntgen-Scanningmaschine gemäß dem Verfahren nach einem der Ansprüche 1 bis 4 unter Verwendung der intermediären Bilddaten, die durch die Vorbereitung erzeugt wurden.

8. Emulator zum Emulieren einer Röntgen-Scanningmaschine, wobei der Emulator **dadurch gekennzeichnet ist, dass** er für Folgendes ausgelegt ist:
Empfangen von intermediären Bilddaten, die rohen Röntgen-Bilddaten für ein gescanntes Objekt entsprechen, wobei die intermediären Bilddaten Arten von Material im gescannten Objekt kodieren;
Empfangen einer Anzeige eines gewählten Röntgengerätes, das emuliert werden soll, wobei das gewählte Röntgengerät aus einer Gruppe ausgewählt wird, die mindestens ein erstes Röntgengerät und ein zweites Röntgengerät umfasst, wobei das erste Röntgengerät ein anderes Repräsentationsschema zum Erzeugen von Bildern aus rohen Röntgenbilddaten verwendet, als das zweite Röntgengerät; und
Erzeugen von simulierten Bilddaten auf der Basis der Arten von Material, die in den intermediären Bilddaten und auf dem gewählten Röntgengerät kodiert sind, wobei die simulierten Bilddaten das Bild simulieren, das auf dem gewählten Röntgengerät für die rohen Röntgenbilddaten angezeigt werden soll.

9. Emulator nach Anspruch 8, wobei der Emulator ferner dafür ausgelegt ist, die simulierten Bilddaten auszugeben.

10. Emulator nach Anspruch 8 oder 9, wobei der Emulator ein Web-Browser-basierter Client ist und optional ein Web-Browser-Plug-in oder unter Verwendung eines Web-Browser-Plug-ins implementiert wird.

11. Emulator nach einem der Ansprüche 8 bis 10, wobei der Emulator eine Smartphone-Applikation oder eine Tablet-Applikation ist.

12. Vorverarbeitungssystem zum Vorbereiten auf die Emulation einer Röntgen-Scanningmaschine nach den Ansprüchen 8 bis 11, wobei das Vorverarbeitungssystem dafür ausgelegt ist,
rohe Röntgen-Bilddaten für ein gescanntes Objekt zu empfangen;
die rohen Röntgen-Bilddaten zum Identifizieren von Materialarten im gescannten Objekt zu verarbeiten; und
intermediäre Bilddaten zu erzeugen, wobei die intermediären Bilddaten die Arten von Material kodieren, die beim Verarbeitungsschritt identifiziert werden.

13. Vorverarbeitungssystem nach Anspruch 12, wobei das Vorverarbeitungssystem die Bilddatenspeicherung umfasst, die zum Speichern von intermediären Bilddaten ausgelegt ist.

14. System zum Emulieren einer Röntgen-Scanningmaschine, wobei das System umfasst: ein Vorverarbeitungssystem nach Anspruch 12 oder 13; und
einen Emulator nach einem der Ansprüche 8 bis 11, der dafür ausgelegt ist, die intermediären Bilddaten vom Vorverarbeitungssystem zu empfangen.

15. Computerprogramm, das Anweisungen umfasst, die einen programmierbaren Computer veranlassen, ein Verfahren nach einem der Ansprüche 1 bis 7 auszuführen.

## Revendications

1. Procédé pour émuler une machine de balayage par rayons X, le procédé étant **caractérisé en ce qu'**il consiste :
à recevoir des données d'image intermédiaires correspondant à des données d'image de rayons X brutes pour un objet balayé (202, 204, 206, 208), dans lequel les données d'image intermédiaires codent des types de matériau dans l'objet balayé ;
à recevoir une indication d'une machine à rayons X sélectionnée à émuler, dans lequel la machine à rayons X sélectionnée est sélectionnée dans un groupe comprenant au moins une première machine à rayons X et une seconde machine à rayons X, la première machine à rayons X utilisant un schéma de représentation différent pour générer des images à partir de données d'image de rayons X brutes de celui de la seconde machine à rayons X ; et
à générer des données d'image simulées en se basant sur les types de matériau codés dans les données d'image intermédiaires et sur la machine à rayons X sélectionnée, les données d'image simulées simulant l'image à afficher sur la machine à rayons X sélectionnée pour les données d'image de rayons X brutes.

2. Procédé selon la revendication 1, dans lequel le procédé consiste à produire les données d'image simulées.

3. Procédé selon la revendication 1 ou 2, dans lequel le procédé est réalisé par un client faisant appel à un navigateur Web et, facultativement, dans lequel le procédé est réalisé par un plugiciel de navigateur Web ou utilisant un plugiciel de navigateur Web.

4. Procédé selon l'une quelconque des revendications 1 à 3, dans lequel le procédé est réalisé par une application de téléphone intelligent ou une application de tablette.

5. Procédé pour préparer une émulation d'une machine de balayage par rayons X selon la revendication 1, le procédé consistant :
à recevoir des données d'image de rayons X brutes pour un objet balayé ;
à traiter les données d'image de rayons X brutes pour identifier des types de matériau dans l'objet balayé ; et
à générer des données d'image intermédiaires, dans lequel les données d'image intermédiaires codent les types de matériau identifiés à l'étape de traitement.

6. Procédé selon la revendication 5, dans lequel le procédé consiste, après la génération des données d'image intermédiaires, à stocker les données d'image intermédiaires dans un stockage de données d'image.

7. Procédé pour émuler une machine de balayage par rayons X, le procédé consistant :
à préparer une émulation d'une machine de balayage par rayons X selon le procédé selon la revendication 5 ou 6 ; et
au niveau d'un émulateur, à émuler une machine de balayage par rayons X selon le procédé selon l'une quelconque des revendications 1 à 4, utilisant les données d'image intermédiaires générées par la préparation.

8. Émulateur pour émuler une machine de balayage par rayons X, l'émulateur étant **caractérisé en ce qu'**il est conçu :
pour recevoir des données d'image intermédiaires correspondant à des données d'image de rayons X brutes pour un objet balayé, dans lequel les données d'image intermédiaires codent des types de matériau dans l'objet balayé ;
pour recevoir une indication d'une machine à rayons X sélectionnée à émuler, dans lequel la machine à rayons X sélectionnée est sélectionnée dans un groupe comprenant au moins une première machine à rayons X et une seconde machine à rayons X, la première machine à rayons X utilisant un schéma de représentation différent pour générer des images à partir de données d'image de rayons X brutes de celui de la seconde machine à rayons X ; et
pour générer des données d'image simulées en se basant sur les types de matériau codés dans les données d'image intermédiaires et sur la machine à rayons X sélectionnée, les données d'image simulées simulant l'image à afficher sur la machine à rayons X sélectionnée pour les données d'image de rayons X brutes.

9. Émulateur selon la revendication 8, dans lequel l'émulateur est en outre conçu pour produire les données d'image simulées.

10. Émulateur selon la revendication 8 ou 9, dans lequel l'émulateur étant un client faisant appel à un navigateur Web et, facultativement, étant un plugiciel de navigateur Web ou mis en oeuvre à l'aide d'un plugiciel de navigateur Web.

11. Émulateur selon l'une quelconque des revendications 8 à 10, l'émulateur étant une application de téléphone intelligent ou une application de tablette.

12. Système de prétraitement pour préparer une émulation d'une machine de balayage par rayons X selon les revendications 8 à 11, le système de prétraitement étant conçu :
pour recevoir des données d'image de rayons X brutes pour un objet balayé ;
pour traiter les données d'image de rayons X brutes pour identifier des types de matériau dans l'objet balayé ; et
pour générer des données d'image intermédiaires, dans lequel les données d'image intermédiaires codent les types de matériau identifiés à l'étape de traitement.

13. Système de prétraitement selon la revendication 12, dans lequel le système de prétraitement comprend un stockage de données d'image conçu pour stocker des données d'image intermédiaires.

14. Système pour émuler une machine de balayage par rayons X, le système comprenant :
un système de prétraitement selon la revendication 12 ou 13 ; et
un émulateur selon l'une quelconque des revendications 8 à 11, configuré pour recevoir les données d'image intermédiaires en provenance du système de prétraitement.

15. Programme d'ordinateur comprenant des instructions pour contraindre un ordinateur programmable à réaliser un procédé selon l'une quelconque des revendications 1 à 7.
